# EUROPÄISCHE PATENTANMELDUNG

(11) **EP 1 371 963 A2**
(43) Veröffentlichungstag der Anmeldung: **17.12.2003**
(21) Anmeldenummer: 03101726.2
(22) Anmeldetag: 12.06.2003
(51) Int. Cl.: G01N 1/00, G01N 30/20

(54) **Verfahren und Vorrichtung zur Steuerung von Ventilen**

(30) Priorität: 12.06.2002 AT 8842002
(71) Anmelder: Maymed Medical Electronics Development GesmbH, 1150 Wien (AT)
(72) Erfinder:
(74) Vertreter: KLIMENT & HENHAPEL

(57) **Zusammenfassung**

Vorrichtung zur Verbindungserstellung von Ein- und Ausgängen einer Ventileinrichtung (4) für gasförmige und flüssige Medien mittels eines Stellantriebs, der einen Schrittmotor (1) sowie eine Steuereinheit (9) umfasst, wobei der Rotor (5) des Schrittmotors (1) mit einem Rotationselement (3) der Ventileinrichtung (4) verbunden ist, das bei Drehung um bestimmte Schaltwinkel unterschiedliche Ein- und Ausgänge miteinander verbindet. Erfindungsgemäß ist ein Kupplungsstück (2) vorgesehen, das die Drehzahl des Rotors (5) des Schrittmotors (1) unverändert auf das Rotationselement (3) überträgt sowie eine Steuereinheit (9), die Rotationsinkremente des Rotationselements (3) ermöglicht, die kleiner sind als die Schaltwinkel. Des weiteren wird ein Verfahren zur Kalibrierung der erfindungsgemäßen Vorrichtung vorgeschlagen.

## Beschreibung

Die Erfindung bezieht sich auf eine Ventilsteuereinheit gemäß dem Oberbegriff von Anspruch 1 sowie ein Verfahren zur Kalibrierung der erfindungsgemäßen Ventilsteuereinheit.

Vorrichtungen dieser Art finden generell überall dort Einsatz, wo Gase oder Flüssigkeiten entlang verschiedener Transportwege in zeitlich abhängiger Weise geleitet werden müssen. So kann es etwa notwendig sein, zu unterschiedlichen Zeitpunkten Flüssigkeit aus unterschiedlichen Probenbehältern anzusaugen und über eine Ventileinrichtung etwa einer Analyseapparatur zuzuführen. In diesen Fällen werden die einzelnen Probenbehälter mit der Ventileinrichtung verbunden, und die Ventilsteuereinheit sorgt dafür, dass zum passenden Zeitpunkt eine Verbindung zwischen dem Eingang zur Ventileinrichtung aus dem jeweiligen Probenbehälter und dem Ausgang aus der Ventileinrichtung zur Analyseapparatur hergestellt wird. Dazu sieht die Ventileinrichtung neben den Anschlüssen als Ein- und Ausgänge auch ein Rotationselement mit Verbindungskanälen vor, die je nach Stellung des Rotationselements unterschiedliche Ein- und Ausgänge miteinander verbinden. Ein Beispiel wäre etwa die Anwendung von Vorrichtungen dieser Art im Rahmen von Gas (GC)- oder Flüssigchromatographiesystemen (LC). Ein Spezialfall wäre z.B. die Säulenchromatographie.

Chromatographiesysteme gemäß dem Stand der Technik sind in sogenannte Chromatographiedatensysteme (CDS) eingebunden, die neben den eigentlichen Chromatographie-Komponenten wie Detektor, Pumpen, Säulenofen usw. auch ein Datensystem zur Auswertung bzw. Interpretation der Messergebnisse beinhalten. Diese Chromatographiedatensysteme können mit Ventileinrichtungen ergänzt werden, die je nach Anforderung geeignet gewählt werden müssen. In der ON-line Analytik kommt man ohne Säulenschalttechniken nicht aus, wie noch später näher erwähnt wird.

So stehen etwa unterschiedliche Ventileinrichtungen wie 2-Positionsventile, Multipositionsventile oder auch elektromagnetische Ventile, jeweils auch als Hoch- oder Niederdruckschaltventile, zur Verfügung, wie noch näher ausgeführt werden wird. Diese Ventileinrichtungen werden in der Regel von deren Herstellern gemeinsam mit entsprechenden Ventilsteuerungen (Stellantrieben) angeboten, die unter Umständen auch auf den jeweiligen Ventiltyp abgestimmte Softwarepakete beinhalten und für zeitlich abhängige, unterschiedliche Weiterleitungen von Probenflüssigkeiten- oder gasen sorgen. Stellantriebe gemäß dem Stand der Technik sind somit zumeist an einen Ventiltyp gebunden. Die Steuerung der Stellantriebe kann über TTL-Signale oder/und digitale Schnittstellen erfolgen. Für Steuerungen, die über eine digitale Schnittstelle verfügen, wird vom Hersteller auch ein Kommunikationsprotokoll erhältlich sein. Dieses Protokoll wird in erster Linie dazu dienen, den Herstellern von CDS die Einbindung in dieses zu ermöglichen. Stellantriebe gemäß dem Stand der Technik bestehen zumeist aus einer gekapselten Einheit, in der die Elektronik, Mechanik und eventuell auch das Netzteil eingebaut sind. Die Verbindung von Schrittmotor und Rotationselement der Ventileinrichtung wird dabei zumeist über ein Getriebe hergestellt. Die schnellste Schaltgeschwindigkeit beträgt dabei derzeit 100 Millisekunden bei einem Schaltwinkel von 60°. Bei vielen Ventilen mit einem fixen Schaltwinkel von 60° wird das Rotationselement durch zwei Stoppbolzen mechanisch begrenzt. Es sind Stellantriebe bekannt, welche diese Maßnahme nutzen und ohne Rückmeldung der physikalischen Position gegen den Anschlag des Stoppbolzen fahren. Dieses Verfahren erzeugt im Ventil einen kurzen Rückschlag des Rotationselementes und verringert außerdem die Lebensdauer des Ventils.

Dabei stellt sich in der Praxis zumeist das Problem, dass die Hersteller von Chromatographiedatensystemen keine Ventileinrichtungen bzw. deren Steuerungen herstellen. Somit muss das CDS, das zumeist ebenfalls rechnergestützt betrieben wird, auf den Hersteller von Schaltventilen abgestimmte Softwarepakete (Treiber) enthalten, um die zu verwendende Ventileinrichtung in das CDS einbinden zu können. Oft soll aber das CDS für unterschiedliche Anwendungen eingesetzt werden, die mitunter unterschiedliche Ventileinrichtungen benötigen, die wiederum von verschiedenen Herstellern stammen, sodass sich des öfteren systembedingte und softwaremäßige Inkompatibilitäten einstellen. Zusätzlich werden Ventilsteuerungen zumeist von den Herstellern entsprechender Ventileinrichtungen entwickelt und angeboten, die somit lediglich für einen bestimmten Typ von Ventileinrichtungen geeignet sind. Eine komplikationslose Adaptierung eines CDS an unterschiedliche Anwendungen ist in der Praxis nur mit einer genauen internen Kenntnis des CDS, insbesondere des Quellcodes, verbunden. Der Quellcode ist dem Benutzer aber meist nicht zugänglich.

Ziel der Erfindung ist es somit, eine Ventilsteuereinrichtung zu verwirklichen, die es ermöglicht, verschiedene Ventiltypen auf vielfältige Bedienungsarten in ein bestehendes CDS ohne Ressourcen des CDS zu beanspruchen einzubinden. Es ist ferner Ziel der Erfindung, eine schnellere Ventilschaltung als bei konventionellen Ventilsteuerungseinrichtungen zu ermöglichen. Insbesondere soll hinsichtlich der mechanischen Komponenten der Ventilsteuereinheit ein einfacherer Aufbau gewährleistet werden. Das wird durch die kennzeichnenden Merkmale von Anspruch 1 erreicht.

Erfindungsgemäß ist dazu vorgesehen, zur Verbindungserstellung von Ein- und Ausgängen einer Ventileinrichtung für gasförmige und flüssige Medien einen Stellantrieb zu verwenden, der einen Schrittmotor sowie eine Steuereinheit umfasst, wobei der Rotor des Schrittmotors mit einem Rotationselement der Ventileinrichtung verbunden ist, das bei Drehung um bestimmte Schaltwinkel unterschiedliche Ein- und Ausgänge miteinander verbindet. Gemäß Anspruch 1 ist ein Kupplungsstück vorgesehen, das die Drehzahl des Rotors des Schrittmotors unverändert auf das Rotationselement überträgt sowie eine Steuereinheit, die Rotationsinkremente des Rotationselements ermöglicht, die kleiner sind als die Schaltwinkel. Insbesondere ist bei der erfindungsgemäßen Ventilsteuereinrichtung kein Getriebe vorgesehen, wie dies sonst bei Stellantrieben dieser Art gemäß dem Stand der Technik üblich ist. Stattdessen wird über eine direkte Übersetzung die Drehzahl des Rotors des Schrittmotors direkt auf das Rotationselement übertragen. Durch das Ermöglichen von mitunter sehr kleinen Rotationsinkrementen von wenigen Graden kann, wie noch genauer ausgeführt werden wird, jede beliebige Position des die Verbindung von Ein- und Ausgängen bestimmenden Rotationselementes angesteuert werden und davon ausgehend jeder beliebige Schaltwinkel verwirklicht werden. So kann etwa, unter Verwendung eines geeigneten Kupplungsstücks, problemlos von einer Ventileinrichtung mit einem vorgesehenen Schaltwinkel von 60° etwa auf eine Ventileinrichtung mit einem vorgesehenen Schaltwinkel von 30° umgerüstet werden. Zur näheren Erläuterung wird auf die folgende, detaillierte Ausführungsbeschreibung verwiesen.

Die Ansprüche 3 bis 5 sehen konkrete Ausführungsformen der erfindungsgemäßen Ventilsteuereinrichtung vor.

Die Ansprüche 6 und 7 sehen vorteilhafte Ausführungsformen der erfindungsgemäßen Steuereinheit vor.

Die Merkmale von Anspruch 8 haben sich als vorteilhaft erwiesen, um eine präzise Ansteuerung des Rotationselements durch den Schrittmotor zu ermöglichen, da dadurch ein steter Abgleichung zwischen Soll- und Ist-Position des Rotors des Schrittmotors möglich ist.

Die Merkmale gemäß Anspruch 9 sehen eine vorteilhafte Ausführungsform der erfindungsgemäßen Ventilsteuereinheit in Form einer apparativen Einheit vor, der zu Folge auch ein Bedienelement integriert ist, sodass eine Anbindung an einen externen Rechner nicht unbedingt notwendig ist.

Die Ansprüche 10 und 11 sehen schließlich ein Verfahren zur Kalibrierung der erfindungsgemäßen Ventilsteuereinheit vor, wie es bei der Verwendung der erfindungsgemäßen Ventilsteuereinheit hinsichtlich eines 2-Positionsventils bzw. eines Multipositionsventils angezeigt ist.

Die Erfindung wird nun im folgenden anhand der beiliegenden Figuren näher erläutert. Dabei zeigen
Fig. 1a eine mögliche Schaltposition eines 2-Positionsventils,
Fig. 1b eine zweite mögliche Schaltposition eines 2-Positionsventils nach Drehung des Rotationselements um einen bestimmten Schaltwinkel, in der gezeigten Ausführungsform um 60°,
Fig. 2 eine mögliche Schaltposition eines Multipositionsventils,
Fig. 3 eine schematische Darstellung des erfindungsgemäßen Stellantriebs,
Fig. 4 ein Blockschaltbild des erfindungsgemäßen Stellantriebs und
Fig. 5 eine schematische Darstellung eines möglichen Experimentaufbaus zur Darstellung einer möglichen Anwendung des erfindungsgemäßen Stellantriebs zusammen mit einem Magnetventil (EMV).

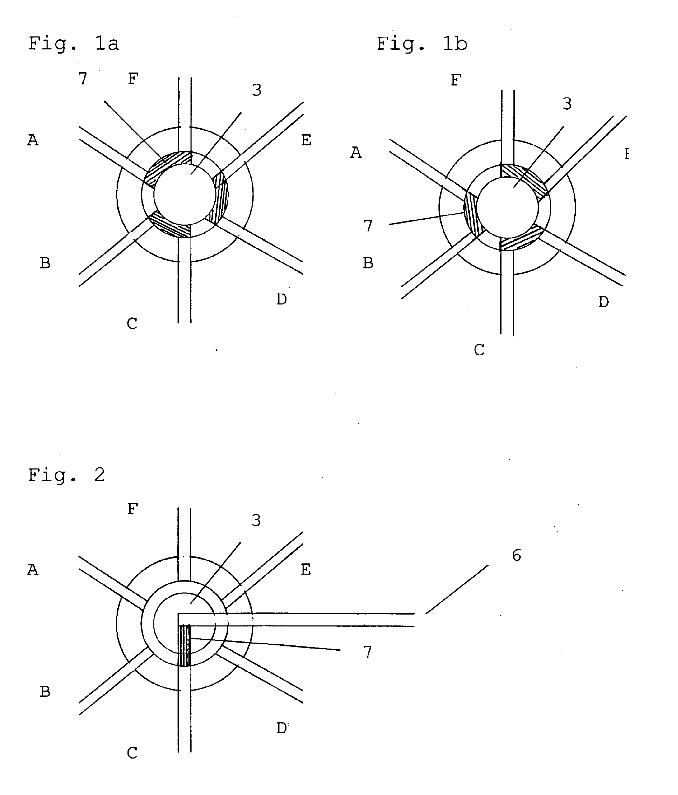

Bei einer dem Stand der Technik entsprechenden Ventileinrichtung 4 gemäß Figur 1, einem sogenannten 2-Positionsventil, sind die Schaltpunkte durch ein Winkelsegment von, im dargestellten Fall, 60° eindeutig definiert. Die in Fig. 1a dargestellte Position stellt eine Verbindung zwischen den Anschlüssen A und F, B und C sowie D und E her. In der Schaltposition gemäß Fig. 1b wird eine Verbindung zwischen den Anschlüssen A und B, C und D sowie E und F hergestellt. Je nach Schaltposition, die durch die Stellung der Rotationseinheit 3 gegeben ist, werden somit die durch die Ein- und Ausgänge A bis F strömenden Flüssigkeiten bzw. Gase über die Verbindungskanäle 7 auf unterschiedliche Transportwege geleitet. Bei einem Ventil gemäß Figur 1 wird das Rotationselement 3 zwischen den beiden in Fig. 1a und Fig. 1b gezeigten Positionen hin- und hergeschaltet.

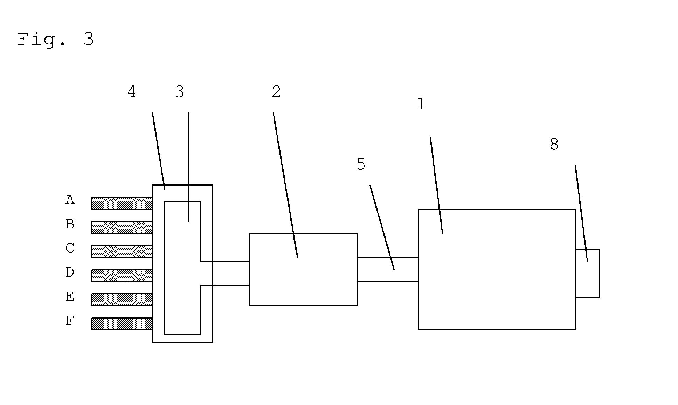

Figur 2 stellt hingegen ein sogenanntes Multipositionsventil dar, bei dem ein zentraler Ein- bzw. Ausgang 6 vorgesehen ist, der über verschiedene Stellungen des Rotationselements 3 über den Verbindungskanal 7 mit unterschiedlichen Ein- und Ausgängen A bis F verbunden werden kann. Bei einem Ventil gemäß Figur 2 wird das Rotationselement 3 zwischen sechs verschiedenen Positionen hin- und hergeschaltet. Selbstverständlich können bei Ventilen dieser Art auch alle anderen durch den Einheitskreis von 360° ganzzahlig teilbaren Positionen vorgesehen sein.

Ferner sind gemäß dem Stand der Technik auch elektromagnetische Ventile bekannt, die in ihrem Funktionsprinzip 2-Positionsventile sind und durch die Strombeaufschlagung einer Spule geschalten werden. Wird die Spule nicht von Strom durchflossen, so entspricht dies einer ersten Schaltstellung des Ventils, während bei Stromfluss durch die Spule eine zweite Schaltstellung verwirklicht wird.

Der Schaltzustand einer Ventileinrichtung 4 gemäß Fig. 1 und 2 wird somit über die Rotationsstellung des Rotationselements 3 festgelegt, das über Verbindungskanäle 7 je nach Stellung des Rotationselements 3 unterschiedliche Ein- und Ausgänge A bis F verbindet. Die Rotationsstellung des Rotationselements 3 wird wiederum vom Stellantrieb bestimmt. Eine Ausführungsform des erfindungsgemäßen Stellantriebs ist dabei in Figur 3 dargestellt. Ein Schrittmotor 1 umfasst dabei einen Rotor 5, von dem in Fig. 3 lediglich seine Welle sichtbar ist. Der Schrittmotor 1 kann ein dem Stand der Technik ensprechender Schrittmotor sein und muss die mechanischen Spezifikationen in Bezug auf Drehmoment, Haltemoment und Geschwindigkeit erfüllen. Er kann dabei wahlweise mit einer Positionsrückmeldeeinheit 8 in beliebiger Anordnung versehen sein, wobei die Positionsrückmeldung im einfachsten Fall aus einer Gabellichtschranke oder einem Hallsensor besteht, die zumindest einen Referenzpunkt bei der Rotordrehung erfasst. Vorzugsweise wird ein lagegeregeltes Antriebssystem mit Rückmeldung verwendet, wobei die Steuereinheit 9 laufend einen Soll-Ist-Vergleich der Rotorposition durchführt und bei einer Regelabweichung den Motor entsprechend nachregelt. Die Rückmeldung erfolgt dabei vorzugsweise mittels eines Absolutoder Inkrementaldrehgebers.

Der Rotor 5 ist über ein Kupplungsstück 2 mit dem Rotationselement 3 verbunden. Das Kupplungsstück 2 dient dazu, unterschiedliche Typen des Rotationselements 3 der Ventileinrichtung 4 an den Rotor 5 des Schrittmotors 1 anbinden zu können und überträgt die Drehzahl unverändert auf das Rotationselement 3. Bei der Verwendung von elektromagnetischen Ventilen (2-, 3- oder 4-Weg-Ventile) kann eine Feedbackschaltung vorgesehen sein, die den im Magnetventil beim Schaltvorgang entstehenden Spulenstrom misst und auswertet, um elektronisch nachweisen zu können, ob das Magnetventil auch schaltet.

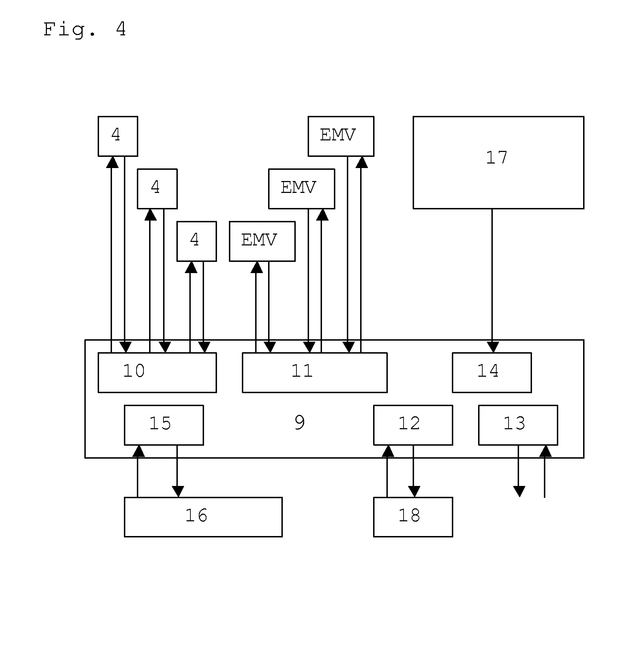

Eine Ausführungsform der Steuereinheit 9 der erfindungsgemäßen Ventilsteuereinheit wird anhand des Blockschaltbilds gemäß Figur 4 dargestellt. Die Steuereinheit 9 umfasst dabei die Ventil-Kontrolleinheit 10, die die Steuerung von einer oder mehreren Ventileinrichtungen 4 übernimmt, wahlweise eine Magnetventil-Kontrolleinheit 11, die die Steuerung von einem oder mehreren elektromagnetischen Ventilen EMV übernimmt, eine Schnittstelle 12 zur wahlweisen Kommunikation mit einem Rechner 18, ein I/O-Port 13 zur manuellen Steuerung der Steuereinheit 9 sowie zur Ausgabe von Flags an externe Geräte, eine Triggerkontrolleinheit 14 zur Verarbeitung eines oder mehrerer Triggersignale von externen Geräten 17, wie etwa dem Injektionssignal eines automatischen Probengebers, sowie eine Schnittstelle 15 für das Bedienelement 16. Das Bedienelement 16 ist eine Einheit, die einerseits eine Konfigurierung aller von der Steuereinheit 9 geregelten Einheiten erlaubt und andererseits einen von der Steuersoftware unabhängigen Betrieb der erfindungsgemäßen Ventilsteuereinheit erlaubt. Das Bedienelement 16 ist eine modulare Einheit, die zumindest über eine optische Anzeigeeinheit, im einfachsten Fall Leuchtdioden, 7-Segmentanzeigen oder andere Arten gemäß dem Stand der Technik verfügbarer LCD-Anzeigen verfügt. Weiters ist das Bedienelement 16 mit einer Eingabeeinheit ausgestattet, die im einfachsten Fall aus einer Tastatur besteht. Das Bedienelement 16 kann integriertes Bestandteil der Steuereinheit 9 sein oder auch extern betrieben werden, wobei auch beide Ausführungsformen gemeinsam möglich sind.

Bei der Inbetriebnahme der erfindungsgemäßen Vorrichtung etwa mithilfe eines 2-Positionsventils als Ventileinrichtung 4 der Wahl oder bei der Umrüstung eines bestehenden CDS auf Verwendung eines 2-Positionsventils wird zunächst das Rotationselement 3 des 2-Positionsventils über das Kupplungsstück 2 an den Rotor 5 des Schrittmotors 1 angeflanscht. Der Rotor 5 wird nun so bewegt, dass sich das Rotationselement 3 in einer Position gemäß Fig. 1a oder Fig. 1b befindet. Diese Position wird in der Steuereinheit 9 gespeichert. Daraufhin wird der Rotor 5 in die jeweils zweite Position gemäß Fig. 1a oder Fig. 1b gebracht und das durchlaufene Winkelsegment als Stellwinkel sowie die zweite Position in der Steuereinheit 9 gespeichert. Der erfindungsgemäße Stellantrieb ist nun betriebsbereit. Entscheidend hierbei ist, dass nicht nur der Schrittmotor 1 so ausgeführt ist, dass sowohl dessen physikalische Auflösung des Schrittwinkels als auch dessen Schrittwinkelgenauigkeit im Bereich weniger Grad oder vorzugsweise darunter liegen, sondern dass auch über die Steuereinheit 9 die Möglichkeit besteht, einzelne Rotationsinkremente gezielt anzusteuern. So ist es nicht nur möglich, das Rotationselement 3 in eine genau spezifizierte Position zu bringen, die entweder der Position gemäß Fig. 1a oder 1b entspricht, sondern auch über die gespeicherte Anzahl von Rotationsinkrementen einen Stellwinkel exakt zu reproduzieren. Eine nennenswerte Nachjustierung des Rotors 5 unter Zuhilfenahme der wahlweise vorhandenen Positionsrückmeldeeinheit 8 ist dadurch nicht erforderlich.

Soll in weiterer Folge etwa auf ein Multipositionsventil als Ventileinrichtung 4 der Wahl umgerüstet werden, so wird das Rotationselement 3 des Multipositionsventils über ein geeignetes Kupplungsstück 2 an den Rotor 5 des Schrittmotors 1 angeflanscht. Der Rotor 5 wird nun so bewegt, dass sich das Rotationselement 3 in einer Position gemäß Fig. 2 befindet. Diese Position wird in der Steuereinheit 9 als Referenzposition gespeichert. Im folgenden können alle ganzzahlig teilbaren Segmente des Einheitskreises von 360° programmiert werden, je nach Anzahl der Ein- und Ausgänge der Ventileinrichtung 4. Handelt es sich um ein Multipositionsventil mit 6 Ein- und Ausgängen gemäß Fig. 2, so werden 60° als Schaltwinkel ausgewählt, handelt es sich um ein Ventil mit 12 Ein- und Ausgängen, so werden 30° als Schaltwinkel ausgewählt, usw. Über die gespeicherte Referenzposition und den jeweiligen Schaltwinkel kann somit jeder Schaltzustand der Ventileinrichtung 4 verwirklicht werden.

Stellantriebe gemäß dem Stand der Technik werden bereits vom Hersteller gemeinsam mit der Ventileinrichtung 4 bereitgestellt, sodass diese Kalibrierschritte nicht notwendig und auch nicht möglich sind. Ein Wechsel etwa von einem 2-Positionsventil auf ein Multipositionsventil ist somit nur über Austausch des gesamten Stellantriebs und der entsprechenden Steuersoftware möglich, während bei der erfindungsgemäßen Vorrichtung lediglich der Austausch der Ventileinrichtung 4 vonnöten ist.

Während des Betriebs der erfindungsgemäßen Ventilsteuereinheit kann ein neuer Schaltzustand der Ventileinrichtung 4 entweder manuell über die Bedieneinheit 16, zeitgesteuert über die Bedieneinheit 16, zeitgesteuert über eine entsprechend programmierte Steuereinheit 9 oder auch über TTL-Signale bzw. "Contactclosure" angewählt werden. In einer bevorzugten Ausführungsform der Steuersoftware für die erfindungsgemäße Ventilsteuereinheit kann die Bedienungsperson in einer Tabelle für die jeweils anzusteuernden Ventileinrichtungen 4 jene Zeitpunkte festlegen, zu denen eine Änderung des Schaltzustandes der angesteuerten Ventileinrichtungen 4 erfolgen soll, und auch den gewünschten Schaltzustand spezifizieren. Die gewünschte Abfolge an Schaltzuständen kann danach entweder manuell oder über ein externes Triggersignal gestartet und einmal oder auch mehrmals durchlaufen werden, wobei die Beendigung entweder manuell oder nach einer vorher festgelegten Anzahl an Durchläufen erfolgt.

Die erfindungsgemäße Ventilsteuereinheit zeichnet sich somit durch flexible Verwendbarkeit mit einer Vielzahl an Ventileinrichtungen 4 unterschiedlicher Hersteller aus und kann mit jeglichem am Markt befindlichen CDS gekoppelt werden. Die Schaltgeschwindigkeit ist dabei größer als jene von herkömmlichen Ventilsteuereinheiten dieser Art und liegt etwa bei einen Schaltwinkel von 60° bei 60 Millisekunden, was auf die direkte Verbindung zwischen Rotor 5 des Schrittmotors 1 und der Rotationseinheit 3 der Ventileinrichtung 4 ohne Verwendung eines Getriebes sowie die präzise Ansteuerung unterschiedlicher Schaltpositionen über kleine Rotationsinkremente zurückzuführen ist.

Die Erfindung soll im folgenden anhand eines Ausführungsbeispiels eines einschlägigen experimentellen Aufbaus illustriert werden.

### Ausführungsbeispiel:

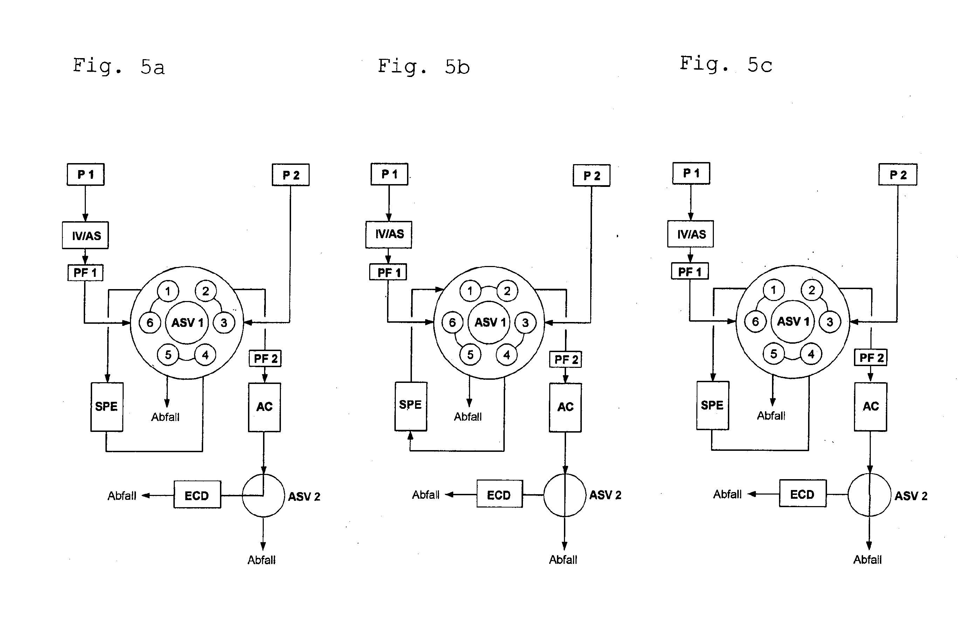

Eine Versuchsanordnung gemäß Fig. 5 wird verwendet, um die Erfindung näher zu illustrieren. Es handelt sich dabei um einen experimentellen Aufbau zur ON-line-Analyse von Katecholaminen (Noradrenalin, Adrenalin, Dopamin) in Blutplasma und Urin, deren Bestimmung für die Diagnostik und die Verlaufsbeurteilung bestimmter Tumorerkrankungen des sympathischen Nervensystems von großer Bedeutung ist. ON-line Analytik bedeutet, dass die gesamte Probenvorbereitung entfällt, und Plasma und Serum direkt dem Analysegerät zugeführt werden können. Hierzu wird in der medizinischen Analytik vorzugsweise die Hochleistungsflüssigkeits-Chromatographie (HPLC) mit elektrochemischer Detektion verwendet. Die Probenvorbereitung erfolgt dabei üblicherweise über Säulenschaltung über eine hochselektive, affinitätschromatische SPE-Säule (SPE: "Solid Phase Extraction"). Zusätzlich zum konventionellen Aufbau von HPLC-Anlagen werden isokratische Pumpen P1 und P2 zur Förderung des SPE-Puffers sowie ein automatisches Hochdruck-Schaltventil ASV1 und ein automatisches Niederdruck-Schaltventil ASV2 verwendet. Mithilfe des Hochdruck-Schaltventils ASV1 werden durch zwei verschiedene Schaltpositionen die Anreicherung der Analyten auf der SPE-Säule SPE (Fig. 5a) und anschließend der Transfer zur analytischen Säule AC (Fig. 5b) sowie die chromatische Trennung der Analyten (Fig. 5c und 5a) vorgenommen. Mithilfe des Niederdruck-Schaltventils ASV2 wird die basische SPE-Pufferfront von der sauren mobilen Phase abgetrennt, womit eine störungsfreie Detektion der Analyten unterstützt wird.

Über das Injektionsventil bzw. den "Autosampler" IV/AS wird dabei die Probe in die mobile Phase gebracht. Zum Zeitpunkt einer Probeninjektion über das IV oder dem AS wird ein "Contactclosure"-Signal ausgegeben, welches zum Starten der Zeittabelle der Säulenschaltung dienen kann. Dieses Signal ist gleichzeitig auch der Startzeitpunkt zum Zeitpunkt t=0.

Im Detail wird während eines Schaltintervalls von 0 bis 5 Minuten des Injektionsventils bzw. dem "Autosampler" IV/AS und dem Inline-Filter PF1 die Probe durch den SPE-Puffer, der einen pH-Wert von 8.7 aufweist, über Eingang 6 und Ausgang 1 von ASV1 zur SPE-Säule SPE transportiert (Fig. 5a). In der SPE-Säule SPE werden die Katecholamine selektiv aus der Probenmatrix extrahiert und die Matrixbestandteile über Eingang 4 und Ausgang 5 von ASV1 in den Abfallbehälter geleitet. Gleichzeitig wird ein saures Medium (pH-Wert 3.0) über P2, Eingang 3 und Ausgang 2 von ASV1 und dem Vorfilter PF2 zur analytischen Säule AC und zur elektrochemischen Detektorzelle ECD transportiert, wodurch die analytische Säule AC und die elektrochemische Detektorzelle ECD vom vorangegangenen Injektions-Zyklus reequilibriert werden.

Während des darauffolgenden Schaltintervalls von 5 bis 7 Minuten werden die extrahierten Katecholamine mit der mobilen Phase über Eingang 3 und Ausgang 4 der Ventileinrichtung ASV1 von der SPE-Säule SPE eluiert und über Eingang 1 und Ausgang 2 von ASV1 zur analytischen Säule AC transportiert (Fig. 5b). Die Analyten werden dort retendiert. Die basische Pufferfront passiert die Säule AC ohne Retention und wird an der elektrochemischen Messzelle ECD vorbei in den Abfallbehälter geleitet.

Die Ventileinrichtung ASV1 wird daraufhin während einer Schaltperiode von 7 bis 9 Minuten wieder in die ursprüngliche Schaltposition gebracht (Fig. 5c). Die Katecholamine werden auf der analytischen Säule AC getrennt und mit der mobilen Phase eluiert. Die SPE-Säule SPE wird reequilibriert.

Während des abschließenden Schaltintervalls von 9 bis 27 Minuten erreicht das Eluat der analytischen Säule AC das Niederdruck-Schaltventil ASV2 und das Ventil ASV2 wird in die ursprüngliche Position zurückgeschaltet (Fig. 5a). Die Katecholamine werden von der elektrochemischen Messzelle ECD detektiert. Das Injektionsintervall zwischen den Analysen beträgt somit 27 Minuten.

Die erfindungemäße Ventilsteuereinheit ist hierbei in der Lage, sowohl die Ansteuerung des 2-Positionsventils ASV1 als auch des elektromagnetischen Ventils ASV2 zu übernehmen und den Wechsel zwischen einzelnen ASV-Schaltpositionen innerhalb von 60 Millisekunden durchzuführen, was bei dem hier verwendeten, hohen Druck von etwa 150 bar gegenüber den üblichen Schaltzeiten von nicht unter 100 Millisekunden vorteilhaft ist. Für die Anwendung der erfindungemäßen Ventilsteuereinheit ist dabei keine Kenntnis des verwendeten CDS notwendig. Die Steuereinheit 9 arbeitet stattdessen eigenständig und unabhängig von der Steuersoftware des CDS, und wird zum Beispiel über das IV/AS Signal getriggert. Die Steuersoftware zeichnet während des Betriebes alle Aktionen auf, welche von der Steuerung ausgeführt werden. Dieses "logging" wird auch Audit Trail genannt und ist aus Gründen von GLP (Good laboratory practice) zwingend erforderlich.

Entsprechende Softwarepakete der Steuereinheit 9 können aber selbstverständlich auf demselben Rechner, von dem aus auch das CDS gesteuert wird, installiert sein.

Sollten die in der Versuchsanordnung gemäß Fig. 5 enthaltenen Komponenten, die im konkreten Beispiel Bestandteile eines HPLC-Systems sind, also die Pumpen P1 und P2, das Injektionsventil IV/AS oder die elektrochemische Detektorzelle ECD nicht über einen Computer gesteuert werden und auch kein Computer für die Steuereinheit 9 zur Verfügung stehen, so können alle Funktionen der erfindungsgemäßen Ventilsteuereinheit auch über das Bedienelement 16 bedient werden. Es ist dadurch jedenfalls keine Einschränkung der Erfindung gegeben.

## Patentansprüche

1. Vorrichtung zur Verbindungserstellung von Ein- und Ausgängen einer Ventileinrichtung (4) für gasförmige und flüssige Medien, insbesondere Körperflüssigkeiten, mittels eines Stellantriebs, der einen Schrittmotor (1) sowie eine Steuereinheit (9) umfasst, wobei der Rotor (5) des Schrittmotors (1) mit einem Rotationselement (3) der Ventileinrichtung (4) verbunden ist, das bei Drehung um bestimmte Schaltwinkel unterschiedliche Einund Ausgänge miteinander verbindet und die Steuereinheit (9) über ein Positioniervermögen zur Ausführung von Drehbewegungen des Rotors (5), deren Drehwinkel im Bereich der Schaltwinkel liegen, verfügt, **dadurch gekennzeichnet, dass** das Positioniervermögen der Steuereinheit (9) so gewählt ist, dass Drehbewegungen des Rotors (5), deren Drehwinkel im Bereich der kleinstmöglichen Schrittwinkel des Schrittmotors (1) liegen, ausführbar sind und ein Kupplungsstück (2) vorgesehen ist, das diese Drehbewegungen des Rotors (5) direkt auf das Rotationselement (3) überträgt.

2. Vorrichtung nach Anspruch 1, **dadurch gekennzeichnet, dass** es sich bei der Einheit aus Ein- und Ausgängen und dem Rotationselement (3) um ein 2-Positionsventil handelt.

3. Vorrichtung nach Anspruch 1 oder 2, **dadurch gekennzeichnet, dass** es sich bei der Einheit aus Einund Ausgängen und dem Rotationselement (3) um ein Multipositionsventil handelt.

4. Vorrichtung nach einem der Ansprüche 1 bis 3, **dadurch gekennzeichnet, dass** die Steuereinheit (9) geeignet ist, zusätzlich elektromagnetische Ventile anzusteuern.

5. Vorrichtung nach einem der Ansprüche 1 bis 4, **dadurch gekennzeichnet, dass** die Steuereinheit (9) geeignet ist, für eine zeitlich gesteuerte Anwahl unterschiedlicher Schaltwinkel des Rotationselements (3) sowie wahlweise von elektromagnetischen Ventilen programmiert zu werden.

6. Vorrichtung nach einem der Ansprüche 1 bis 5, **dadurch gekennzeichnet, dass** sie mit externen Apparaturen (17) wie etwa einem Probengeber verbunden ist und die Steuereinheit (9) geeignet ist, Signale der externen Apparaturen (17) zu empfangen und zu verarbeiten.

7. Vorrichtung nach Anspruch 6, **dadurch gekennzeichnet, dass** die Signale von externen Apparaturen (17) analog oder digital sind, wobei im Fall analoger Signale, etwa Detektorsignale, deren Verarbeitung durch die Steuereinheit (9) und in weiterer Folge die Aktivierung der Ventilsteuerung in Abhängigkeit der Signalform vorgenommen wird.

8. Vorrichtung nach einem der Ansprüche 1 bis 7, **dadurch gekennzeichnet, dass** der Schrittmotor (1) mit einer Positionsrückmeldeeinheit (8) ausgestattet ist.

9. Vorrichtung nach einem der Ansprüche 1 bis 8, **dadurch gekennzeichnet, dass** Schrittmotor (1), Rotationselement (3) und Steuereinheit (9) als apparative Einheit ausgeführt sind, die über ein Bedienelement (16) verfügt, mithilfe deren eine Programmierung der Steuereinheit (9) vorgenommen werden kann.

10. Verfahren zur Kalibrierung einer Vorrichtung nach Anspruch 1, **dadurch gekennzeichnet, dass** der Rotor (5) des Schrittmotors (1) durch Durchlaufen von Rotationsinkrementen in eine erste Position und danach in eine zweite Position gebracht wird und diese Positionen sowie die Summe der Rotationsinkremente, die ausgehend von der ersten Position zur Erreichung der zweiten Position notwendig ist, als Schaltwinkel in der Steuereinheit (9) gespeichert werden.

11. Verfahren zur Kalibrierung einer Vorrichtung nach Anspruch 1, **dadurch gekennzeichnet, dass** der Rotor (5) des Schrittmotors (1) durch Durchlaufen von Rotationsinkrementen in eine erste Position gebracht wird und diese Position mit einem an die Anzahl der Ein- und Ausgänge angepassten, ganzzahlig teilbaren Segment des Einheitskreises von 360° in der Steuereinheit (9) gespeichert wird.
